# FASCICULE DE BREVET EUROPEEN

(11) **EP 0 479 883 B1**
(45) Date de publication et mention de la délivrance du brevet: **14.04.1993**
(21) Numéro de dépôt: 90910780.7
(22) Date de dépôt: 27.06.1990
(51) Int. Cl.: G01P 15/09

(54) **CAPTEUR DE CHOCS ET DISPOSITIFS PORTANT APPLICATION DE CE CAPTEUR**
STOSSSENSOR UND EINRICHTUNGEN, DIE DIESEN STOSSSENSOR TRÄGT
SHOCK DETECTOR AND DEVICES DEMONSTRATING ITS APPLICATION

(30) Priorité: 28.06.1989 FR 8908626
(43) Date de publication de la demande: 15.04.1992
(73) Titulaire: AEROSPATIALE Société Nationale Industrielle, 75781 Paris Cédex 16 (FR)
(72) Inventeur: DUMONT, Jean-Pierre, F-78200 Mantes-la-Jolie (FR); RIVIERE, Daniel, F-78300 Poissy (FR)
(74) Mandataire: Mongrédien, André
(86) Numéro de dépôt international: FR9000476
(87) Numéro de publication internationale: WO9100521

(56) Documents cités:
- FR-A- 2 192 306
- N.T.I.S. Technical notes, décembre 1986, (Springfield, VA, US), U.S. Army Materiel Command, Deputy Chief of Staff for Manufacturing Technology; "Evaluating a multifunction gyro/accelerometer"
- H. Taub & D. Schilling, "Digital Integrated Electronics", 1977, (McGraw-Hill, New York, US), pages 487-489

## Description

La présente invention a pour objet un capteur de chocs et des dispositifs portant application de ce capteur. Elle s'applique notamment à la caractérisation d'un choc (détermination du spectre de choc, ...) et à la mesure d'accélérations et de vitesses.

Une structure mécanique complexe soumise à un choc entre en vibration. Les composantes de basse fréquence de cette vibration jouent un rôle important dans les effets mécaniques suivant le choc, comme par exemple les déplacements relatifs des différentes parties de la structure. Mais leur caractérisation est rendue difficile par la présence de composantes perturbatrices de fréquence plus élevée qui n'influencent pratiquement pas les déplacements mais faussent la mesure.

Les capteurs de chocs connus sont dotés d'une bande passante large (de quelques 10 kHz à quelques 100 kHz) et ceci constitue un inconvénient majeur car la sensibilité de ces capteurs est proportionnelle à leur bande passante : ils ne délivrent aucune information sur les composantes de basse fréquence correspondant à des accélérations avoisinant 100 g. Celles-ci sont noyées parmi les composantes de haute fréquence nombreuses et de forte amplitude. Les accélérations crête mesurées lors des chocs envisagés sont comprises dans la gamme allant de 1 000 g à 100 000 g.

Le but de la présente invention est de fournir un capteur de chocs permettant l'extraction aisée des composantes de basse fréquence de celles de haute fréquence et autorisant ainsi l'évaluation des différents effets mécaniques subis par les parties d'une structure.

Un autre but de la présente invention est de fournir un dispositif de caractérisation d'un choc portant application du capteur, simple à mettre en oeuvre et peu coûteux.

Un autre but de la présente invention est de fournir un gyromètre portant application du capteur simple à mettre en oeuvre et peu coûteux.

De manière précise, la présente invention concerne un capteur de chocs apte à être fixé sur une structure caractérisé en ce qu'il comprend :
- selon un axe longitudinal perpendiculaire à la structure, une tige apte à être solidarisée à la structure par une première extrémité,
- une masselotte solidaire d'une seconde extrémité de la tige,
- au moins un moyen pour détecter des vibrations selon un axe perpendiculaire à l'axe longitudinal, ce moyen étant fixé sur la masselotte.

Ce dispositif constitue un oscillateur mécanique accordé sur une fréquence de résonance fondamentale choisie en fonction du type de choc à traiter. Cet oscillateur est excité lorsque la structure sur laquelle il est fixé est soumise à un choc. Le moyen pour détecter des vibrations délivre alors un signal électrique proportionnel à l'accélération de la masselotte suivant une direction déterminée.

Ce signal, après un traitement approprié, permet de déterminer la vitesse à la base du capteur et d'en déduire le spectre de choc.

La présente invention concerne aussi des dispositifs portant application de ce capteur de chocs, en particulier un dispositif de caractérisation d'un choc et un gyromètre.

On connaît déjà dans l'art antérieur des capteurs d'accélération ou accéléromètres comportant une tige fixée à l'une de ses extrémités à la structure à surveiller et comportant à l'autre extrémité une masse oscillante. C'est le cas par exemple des accéléromètres décrits dans le document FR-A-2.192.306.

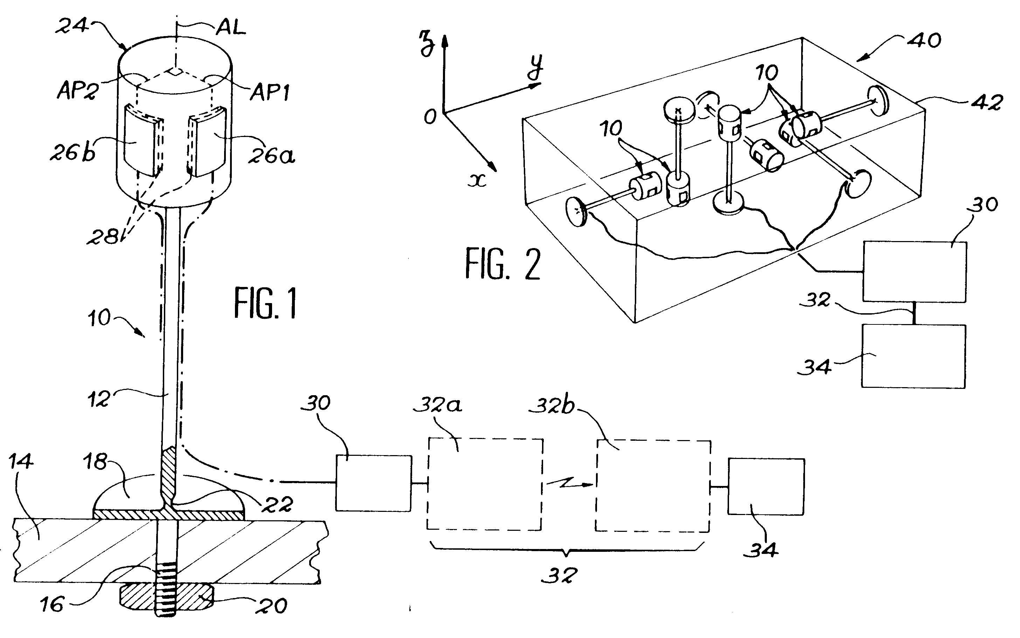

Dans ce document, les figures 1 et 2 qui illustrent l'art connu montrent une réalisation dans laquelle des jauges de contrainte 7 et 8 sont placées sur la tige 2 le long des faces de compression et de traction de cette tige 2, à une certaine distance de la masse 6. Dans une autre réalisation, décrite sur la figure 2, des jauges de contrainte piézorésistantes 7' et 8' sont collées sur les lèvres de deux encoches 10 et 12, faites dans la tige 2 pour canaliser les efforts et les concentrer sur les jauges 7'et 8'.

Dans ce même document, les accéléromètres décrits sur les figures 3, 3', 4 et 4' possèdent deux cavités traversant la tige et des jauges de contraintes collées sur les portions des faces de traction compression de la poutre en regard des cavités.

La raison d'être des structures précédentes est d'obtenir un accéléromètre à large bande passante, pour donner des mesures précises directes de l'accélération à la base du capteur dans une large bande de fréquences, pourvu que la première fréquence de résonance du dispositif soit située très au-dessus des fréquences à mesurer (cf. page 1, lignes 13 à 16). Par ailleurs, les structures décrites dans ce même document permettent, pour augmenter la sensibilité de l'appareil, d'augmenter la fréquence fondamentale du système (page 2, lignes 19 à 21).

Les caractéristiques et avantages de l'invention apparaîtront mieux après la description qui suit donnée à titre explicatif et nullement limitatif. Cette description se réfère à des dessins annexés sur lesquels :
- la figure 1 représente schématiquement un dispositif pour la caractérisation d'un choc conforme à l'invention ;
- la figure 2 représente schématiqument un gyromètre conforme à l'invention.

La figure 1 représente schématiquement un dispositif pour la caractérisation d'un choc. Le dispositif comprend un capteur de choc 10 conforme à l'invention. Ce dernier est fixé sur une structure ou un bâti 14.

Un tel capteur de choc 10 présente une fréquence de résonance fondamentale inférieure à 1 kHz. Il comporte un moyen pour écarter les fréquences de résonance harmoniques de la fréquence de résonance fondamentale du capteur. Lorsque la fréquence de résonance fondamentale est fixée, cela revient à élever la valeur des fréquences de résonance harmoniques. Un exemple d'un tel moyen est donné plus loin ; lors du traitement des signaux électriques délivrés par le capteur, il permet de séparer aisément la composante à la fréquence de résonance fondamentale des composantes aux fréquences de résonance harmoniques.

Le capteur de chocs 10 comporte une tige 12 cylindrique par exemple terminée par une première extrémité 16 qui peut être filetée. La tige 12 est solidaire de la structure 14 : elle est d'une part maintenue grâce à une base 18 et d'autre part fixée sur cette dernière. Pour cela l'extrémité 16 est introduite dans un orifice pratiqué à cet effet dans la structure 14. Un écrou 20 est vissé sur la partie filetée débouchant de l'orifice.

Au repos, la tige 12 est disposée selon un axe longitudinal AL perpendiculaire à la structure 14.

Une gorge 22 est pratiquée perpendiculairement à l'axe AL sur la tige 12 dans le voisinage immédiat de la base 18, c'est-à-dire au pied du capteur 10. La fréquence fondamentale étant fixée, cette gorge 22 permet d'élever la valeur des fréquences de résonance harmoniques. Une telle gorge peut multiplier par dix la valeur de ces fréquences.

Une masselotte 24 est solidaire de l'autre extrémité de la tige 12. Elle peut être par exemple fixée par collage, grâce à une colle du type araldite au cyanolite.

Dans cet exemple de réalisation, la masselotte 24 est cylindrique. Elle est munie de deux moyens pour détecter des vibrations fixés par collage dans des logements 28 pratiqués à cet effet dans la masselotte 24. Ces moyens pour détecter des vibrations sont préférentiellement des détecteurs piézoélectriques 26a et 26b du type 226C fabriqué par la Société Endevco. Ils sont disposés selon deux axes AP1 et AP2 perpendiculaires entre eux et à l'axe AL.

Préférentiellement, la masselotte 24 et les détecteurs de vibrations 26a et 26b forment un ensemble dont le centre de gravité est situé, au repos, sur l'axe AL.

La masse de la tige 12 est négligeable devant la masse de la masselotte 24.

La masse des capteurs de vibrations 26a et 26b s'ajoute à la masse de la masselotte 24.

La rigidité en flexion de la tige 12 et la masse de la masselotte 24 sont choisies de manière à ce que la fréquence de résonance du capteur 10 soit au plus égale à 1 kHz. De plus, la tige 12 est réalisée dans un matériau tel qu'elle résiste aux chocs.

Les données suivantes illustrent de manière non limitative un exemple de réalisation d'un capteur 10 ayant une fréquence de résonance fondamentale égale à 245 Hz :
longueur utile de la tige (de la base à la masselotte) : 60 mm
matériau dans lequel la tige est réalisée :Acier 15CDV6
masse de la tige : 1,4 grammes
diamètre de la tige : 4,5 mm
diamètre de la gorge : 4 mm
matériau dans lequel la masselotte est réalisée : Acier 15CDV6
masse totale de la masselotte : 15 grammes
diamètre de la masselotte : 10 mm
hauteur de la masselotte : 20 mm
masse d'un détecteur de vibrations : 2,8 grammes

Dans tous les cas, la masse totale du capteur de chocs 10 est très inférieure à la masse de la structure 14 qui le supporte.

Lorsque la structure 14 est soumise à un choc, le capteur 10 oscille autour de l'axe AL. Les détecteurs de vibrations 26a et 26b délivrent alors des signaux électriques permettant d'évaluer la vitesse à la base 18 de la tige 12 dans les deux directions AP1 et AP2. Les signaux électriques délivrés par les détecteurs de vibrations 26a et 26b sont proportionnels à l'accélération de la masselotte 24 suivant les axes AP1 et AP2. Ces signaux électriques présentent une composante à la fréquence de résonance fondamentale et des composantes aux fréquences harmoniques ; ces dernières sont filtrées grâce à des moyens de filtrage.

Ces moyens de filtrage peuvent être constitués par un filtre passe-bas éliminant les fréquences supérieures ou égales à une fréquence Fo déterminée. Cette fréquence Fo peut être choisie égale à deux fois la fréquence de résonance fondamentale Fr du capteur de chocs 10. Le signal filtré est ensuite échantillonné par un échantillonneur.

Toutefois de manière préferée, ces moyens de filtrage sont constitués par un échantillonneur 30 effectuant un échantillonnage à une fréquence égale à 4 Fr. L'échantillonneur 30 joue alors le rôle d'un filtre passe-bas ayant une fréquence de coupure égale à 2 Fr. Le filtrage obtenu donne lieu à un faible signal parasite aux fréquences supérieures à 2 Fr considéré comme faisant partie du bruit de mesure dans la suite du traitement du signal.

Grâce à ce filtrage, la bande passante et donc l'étendue de mesure du capteur de chocs sont réduites. L'élévation des fréquences harmoniques de résonance fait que cette réduction n'entraîne pas de déformatian dans l'allure du signal.

Le signal échantillonné est délivré sur une entrée d'un moyen de transmission 32 dans lequel il peut être multiplexé à d'autres signaux. Ce moyen de transmission 32 comprend par exemple un moyen d'émission 32a d'une onde de radiofréquence couplé à un moyen de réception 32b.

Dans le cas d'une émission multiplexée, le démultiplexage est assuré par le moyen de réception 32b qui délivre sur une sortie un signal numérique correspondant au signal échantillonne. Cette sortie est connectée à une entrée de moyens de traitement 34 du type calculateur : ce peut être par exemple un microordinateur.

Lors de sa fabrication, on étalonne le capteur de chocs 10, c'est-à-dire qu'on détermine avec précision l'ensemble des fréquences propres (fréquences de résonance) du capteur et les coefficients d'amortissement s'y rattachant. Ces paramètres sont utiles au traitement.

En effet, les données d'entrée sont fournies par le signal numérique qui correspond à la suite des échantillons représentant l'accélération de la masselotte au cours du temps.

Par déconvolution, à l'aide des fréquences propres et des coefficients d'amortissements mesurés lors de l'étalonnage, on détermine la vitesse de la base du capteur 10 au cours de temps. Cette étape de traitement prend en compte le fait que le capteur de chocs 10 présente une masse négligeable devant la masse de la structure 14 qui le supporte.

La vitesse est déterminée selon les deux directions AP1 et AP2 perpendiculaires entre elles. On peut en déduire la vitesse de la base du capteur 10 dans n'importe quelle autre direction.

A partir de la vitesse à la base, on détermine le spectre de choc en accélération, en supposant que l'accélération est une fonction linéaire par morceau entre deux points d'échantillonnage. Ce spectre constitue la caractérisation recherchée pour un choc. Une fois déterminé, le spectre de choc peut être imprimé sur un support, et conservé dans une mémoire.

La figure 2 représente schématiquement un gyromètre conforme à l'invention.

Ce gyromètre trois couples de capteurs 10 conformes à l'invention et du type de celui précédemment décrit (cf. figure 1). Les capteurs 10 sont fixés sur un support 42 rigide, en forme de boite parallélépipèdique par exemple. Chaque couple de capteurs est composé de deux capteurs placés tête-bêche et fixés sur deux parois opposées de la boite 42. Chacun des couples est fixé selon une des trois directions de l'espace ox, oy, oz. Chaque capteur 10 comporte deux détecteurs de vibrations (un suivant chaque axe transversal), la détermination des vitesses angulaires dans chaque direction de l'espace est doublée, ce qui permet de moyenner les mesures et d'améliorer le rapport signal/bruit.

Dans cet exemple de réalisation, sous l'effet d'un choc chaque capteur 10 délivre deux signaux électriques proportionnels aux accélérations de la masselotte dans les directions perpendiculaires à 'axe longitudinal du capteur. Ces signaux sont échantillonnés par un ensemble d'échantillonneurs 30 qui fait office de moyen de filtrage. L'échantillonnage s'effectue à une fréquence égale à 4 Fr (Fr étant la fréquence de résonance fondamentale des capteurs 10 qui est ici identique pour chaque capteur dans un souci de simplicité) : les échantillonneurs se comportent comme des filtres passe-bas dont la fréquence de coupure est égale à 2 Fr.

On obtient donc en sortie de l'ensemble d'échantillonneurs douze signaux échantillonnés représentant les accélérations des masselottes.

Des moyens de transmission 32 sont connectés à cette sortie. Ces moyens 32 peuvent être identiques à ceux précédemment décrits (cf figure 1). Ils peuvent aussi consister en une simple ligne de connexion.

Des moyens de traitement 34, tel un calculateur du type microordinateur par exemple, sont connectés à une sortie des moyens de transmission 32.

Comme pour le dispositif de caractérisation de chocs décrit précédemment, pour chaque capteur 10, on déduit la vitesse à la base des capteurs en fonction du temps selon les deux directions perpendiculaires à la direction longitudinale des capteurs grâce à une déconvolution à l'aide de la donnée des fréquences propres et des coefficients d'amortisssement de chaque capteur, ceux-ci ayant été déterminés lors d'un étalonnage préalable.

Lors d'un choc, grâce à la connaissance de la vitesse à la base de chacun des capteurs et des distances séparant les bases des capteurs formant un couple, on déduit les vitesses angulaires du support 42 par rapport à un repère de référence fixe.

Le capteur de choc selon l'invention parce qu'il permet de choisir sa fréquence de résonance fondamentale et qu'il est muni de moyens permettant d'élever les fréquences harmoniques, autorise un filtrage de ces dernières réalisé simplement par échantillonnage.

Les signaux échantillonnés sont traités de manière à déduire par une déconvolution la vitesse à la base du capteur lors d'un choc. De là, on détermine un spectre de choc.

## Revendications

1. Capteur de chocs apte à être fixé sur une structure (14), soumise à des chocs, comportant selon un axe longitudinal (AL) perpendiculaire à la structure (14), une tige (12) dont la première extrémité (16) est solidaire de cette structure (14) et dont la seconde extrémité porte une masselotte (24), au moins un moyen (26) pour détecter des vibrations selon un axe (AP1) perpendiculaire à l'axe longitudinal (AL), caractérisé en ce que ce moyen est fixé sur la masselotte, en ce qu'au moins une gorge (22) est prévue dans le pied de la tige (12) au voisinage immédiat de la structure (14) pour écarter les fréquences harmoniques de la fréquence fondamentale de vibration du capteur, et en ce que le signal électrique émis par chaque moyen de détection des vibrations (26) est transmis à une chaîne électronique d'exploitation comprenant, pour l'essentiel, un filtre passe-bas, un échantillonneur (30) relié au moyen de filtrage et délivrant des signaux d'échantillonnage à des moyens de transmission (32a) qui émettent une onde de radiofréquence vers un récepteur (32b) dont la sortie est reliée à un moyen de traitement du signal (34) apte à déterminer, par un traitement de déconvolution à partir des accélérations mesurées de la masselotte (24) dans la direction (AP1) de chaque capteur la vitesse du pied de la tige (12) dans cette même direction.

2. Capteur selon la revendication 1, caractérisé en ce qu'il présente une fréquence de résonance fondamentale Fr au plus égale à 1 kHz.

3. Capteur selon la revendication 1, caractérisé en ce que les moyens pour détecter des vibrations sont constitués de deux capteurs piézoélectriques (26a, 26b), situés sur la masselotte (24) selon deux directions AP1 et AP2 à angle droit l'une de l'autre et par rapport à l'axe (AL).

4. Capteur selon la revendication 1, caractérisé en ce que la masselotte (24) munie du (des) moyen(s) pour détecter des vibrations présente un centre de gravité situé sur l'axe longitudinal (AL) lorsque le capteur (10) est au repos.

5. Capteur selon la revendication 1, caractérisé en ce que la tige (12) et la masselotte (24) sont cylindriques.

6. Capteur selon la revendication 1, caractérisé en ce que les moyens pour détecter des vibrations (20) sont fixés dans au moins un évidement (28) de la masselotte (24).

7. Dispositif selon la revendication 1, caractérisé en ce que l'échantillonneur (30) fonctionne à une fréquence d'échantillonnage égale à quatre fois la fréquence de résonance fondamentale Fr du capteur (10).

8. Application du capteur de chocs selon l'une quelconque des revendications 1 à 7 à la réalisation d'un gyromètre pour mesurer les composantes de la rotation d'une structure selon les trois directions Ox, Oy, Oz de l'espace, caractérisée en ce qu'elle comprend, fixés sur un support rigide (42) en forme de boîte parallélépipédique lié à la structure et dont les arêtes s'étendent selon les directions Ox, Oy, Oz, trois couples de capteurs de chocs comportant chacun une tige solidaire de la structure, une gorge au pied de chaque tige et une masselotte à l'extrémité de la tige opposée à son pied équipée de détecteurs de vibrations, chaque couple de capteurs étant composé' de deux capteurs alignés tête bêche selon une des trois directions Ox, Oy, Oz.

## Claims

1. Shock sensor which can be fixed to a structure (14), which is exposed to the shocks and having along a longitudinal axis (AL) perpendicular to the structure (14), a rod (12), whose first end (16) is integral with said structure (14) and whose second end carries a weight (24), at least one means (26) for detecting vibrations along an axis (AP1) perpendicular to the longitudinal axis (AL), characterized in that said means is fixed to the weight, in that at least one groove (22) is provided in the base of the rod (12) in the immediate vicinity of the structure (14) for removing the harmonic frequencies from the fundamental vibration frequency of said sensor and in that the electric signal emitted by each vibration detection means (26) is transmitted to an electronic exploitation chain essentially comprising a low-pass filter, a sampler (30) connected to the filtering means and supplying sampling signals to transmission means (32a), which emit a radiofrequency wave to a receiver (32b), whose output is connected to a signal processing means (34) able to determine, by a deconvolution treatment and on the basis of accelerations measured with respect to the weight (24) in the direction (AP1) of each sensor, the speed of the base of the rod (12) in said same direction.

2. Sensor according to claim 1, characterized in that it has a fundamental resonant frequency Fr at the most equal to 1 kHz.

3. Sensor according to claim 1, characterized in that the means for detecting the vibrations are constituted by two piezeoelectric sensors (26a, 26b) located on the weight (24) in two directions AP1 and AP2 at right angles with respect to one another and with respect to the axis (AL).

4. Sensor according to claim 1, characterized in that the weight (24) provided with means for detecting vibrations has a centre of gravity located on the longitudinal axis (AL) when the sensor (10) is inoperative.

5. Sensor according to claim 1, characterized in that the rod (12) and the weight (24) are cylindrical.

6. Sensor according to claim 1, characterized in that the vibration detection means (20) are fixed in at least one recess (28) of the weight (24).

7. Device according to claim 1, characterized in that the sampler (30) operates at a sampling frequency equal to four times the fundamental resonant frequency Fr of the sensor (10) .

8. Application of the shock sensor according to any one of the claims 1 to 7 to the construction of a gyrometer for measuring the components of the rotation of a structure in the three directions Ox, Oy and Oz in space, characterized in that it comprises, fixed to a parallelepipedic box-shaped rigid support (42) connected to the structure and whose edges extend in the directions Ox, Oy and Oz, three pairs of shock sensors each having a rod integral with the structure, a groove at the base of each rod and a weight at the end of the rod opposite to its base equipped with vibration detectors, each pair of sensors being constituted by two sensors aligned head to tail in accordance with one of the three directions Ox, Oy and Oz.

## Patentansprüche

1. Stoßsensor, geeignet für die Befestigung an einer feststehenden Struktur (14), die Stößen ausgesetzt ist, der auf einer Längsachse (AL), die senkrecht steht zu der Struktur (14), enthält: eine Stange (12) , deren erstes Ende (16) an der Struktur (14) befestigt ist und deren zweites Ende ein Masseelement (24) trägt, wenigstens ein Mittel (26) zum Erfassen von Schwingungen in Richtung einer zur Achse (AL) senkrecht stehenden Achse (AP1), dadurch **gekennzeichnet,**
daß dieses Mittel an dem Masseelement befestigt ist, dadurch, daß wenigstens eine Hohlkehle (22) vorgesehen ist in dem Fuß der Stange (12) in der unmittelbaren Nähe der Struktur (14), um die Oberschwingungsfrequenzen aus der Grundschwingungsfrequenz des Sensors fernzuhalten und dadurch, daß das von jedem Schwingungserfassungsmittel (26) ausgegebene elektrische Signal zu einer elektronischen Verarbeitungskette übertragen wird, die im wesentlichen umfaßt: einen Tiefpaßfilter, eine Signalabtastschaltung (30), mit Filtermitteln verbunden und Musternahmesignale ausgebend an Übertragungsmittel (32a), die eine Radiofrequenzwelle an einen Empfänger (32b) senden, dessen Ausgang mit einem Mittel zur Signalverarbeitung (34) verbunden ist, das in der Lage ist, durch eine Entfaltungsoperation, ausgehend von den gemessenen Beschleunigungen des Masseelements (24) in der Richtung (AP1) eines jeden Sensors, die Geschwindigkeit des Fußes der Stange (12) in derselben Richtung zu bestimmen.

2. Sensor nach Anspruch 1, dadurch gekennzeichnet, daß er eine Grundresonanzfrequenz Fr von höchstens gleich 1 kHz aufweist.

3. Sensor nach Anspruch 1, dadurch gekennzeichnet, daß die Mittel zum Erfassen der Schwingungen aus zwei piezoelektrischen Sensoren bestehen (26a, 26b), angebracht an dem Masseelement (24) nach zwei Richtungen AP1 und AP2, rechtwinklig zueinander und zur Achse (AL).

4. Sensor nach Anspruch 1, dadurch gekennzeichnet, daß das Masseelement (24), versehen mit dem (den) Mittel(n) zum Erfassen der Schwingungen, einen Schwerpunkt aufweist, der auf der Längsachse (AL) liegt, wenn der Sensor (10) sich in Ruhestellung befindet.

5. Sensor nach Anspruch 1, dadurch gekennzeichnet, daß die Stange (12) und das Masseelement (24) zylindrisch sind.

6. Sensor nach Anspruch 1, dadurch gekennzeichnet, daß die Mittel zum Erfassen der Schwingungen (20) befestigt sind in wenigstens einer Aussparung (28) des Masseelements (24).

7. Vorrichtung nach Anspruch 1, dadurch gekennzeichnet, daß die Signalabtastschaltung (30) mit einer Mustersignalfrequenz arbeitet, die das vierfache der Grundresonanzfrequenz Fr des Sensors (10) beträgt.

8. Anwendung des Stoßsensors nach einem der Ansprüche 1 bis 7 bei der Ausführung eines Gyrometers zum Messen der Winkelgeschwindigkeitskomponenten einer Struktur in den drei Raumrichtungen Ox, Oy, Oz, dadurch gekennzeichnet, daß sie, befestigt an einem starren Träger (42) in der Form eines parallelflachen, mit der Struktur verbundenen Gehäuses, dessen Kanten sich in die drei Richtungen Ox, Oy, Oz erstrecken, drei Paare Stoßsensoren umfaßt, wovon jeder eine an der Struktur befestigte Stange enthält mit einer Hohlkehle am Fuß einer jeden Stange und ein Masseelement an dem dem Fuß gegenüberliegenden Ende der Stange, ausgerüstet mit Schwingungssensoren, wobei jedes Paar Sensoren sich zusammensetzt aus zwei entgegengesetzt angebrachten Sensoren, ausgerichtet nach einer der drei Richtungen Ox, Oy, Oz.
